# EUROPEAN PATENT APPLICATION

(11) **EP 4 503 172 A1**
(43) Date of publication of application: **05.02.2025**
(21) Application number: 22952422.8
(22) Date of filing: 28.07.2022
(51) Int. Cl.: H01M 4/133, H01M 4/583, H01M 10/0525

(54) **SECONDARY BATTERY, PREPARATION METHOD THEREFOR, AND DEVICE CONTAINING SECONDARY BATTERY**

(71) Applicant: Contemporary Amperex Technology (Hong Kong) Limited, Central, Central And Western District (HK)
(72) Inventor: WEI, Xichen, Ningde, Fujian 352100 (CN); WANG, Dandan, Ningde, Fujian 352100 (CN)
(74) Representative: Jacob, Reuben Ellis
(86) International application number: PCT/CN2022/108747
(87) International publication number: WO 2024/020964

(57) **Abstract**

The present application relates to a secondary battery, a manufacturing method therefor, and a device containing the secondary battery. A negative electrode plate of the secondary battery of the present application comprises a negative electrode current collector and a negative electrode film layer, wherein the negative electrode film layer comprises a first negative electrode film layer and a second negative electrode film layer, the first negative electrode film layer is arranged on at least one surface of the negative electrode current collector and comprises a first negative electrode active material, the second negative electrode film layer is arranged on the first negative electrode film layer and comprises a second negative electrode active material, the first negative electrode active material comprises artificial graphite, the second negative electrode active material comprises natural graphite, and the compacted density of the negative electrode film layer is less than or equal to 1.6 g/cm³.

## Description

### Technical Field

The present application belongs to the technical field of electrochemistry, and in particular relates to a secondary battery, a manufacturing method therefor, and a device containing the secondary battery.

### Background Art

Secondary batteries are widely used in various consumer electronic products and electric vehicles due to their outstanding characteristics, such as a light weight, no pollution and no memory effect.

With the development of the new energy industry, higher service requirements have been put forward on the energy density and also electrochemical performance of secondary batteries. However, current methods for increasing the energy density of secondary batteries are often not conducive to balancing the other electrochemical performances of the secondary batteries. Therefore, besides a relatively high energy density, how to improve the other electrochemical properties of secondary batteries is the key challenge in the field of battery design.

In view of this, it is necessary to provide a secondary battery that can solve the above problems.

### Summary of the Invention

In view of the technical problems in the background art, the present application provides a secondary battery, a manufacturing method therefor, and a device containing the secondary battery. The present application aims to impart a secondary battery with a better low-temperature power performance in addition to having a relatively high energy density.

In order to realize the above objective, a first aspect of the present application provides a secondary battery. The secondary battery comprises a negative electrode plate. The negative electrode plate comprises a negative electrode current collector and a negative electrode film layer, wherein the negative electrode film layer comprises a first negative electrode film layer and a second negative electrode film layer, the first negative electrode film layer is arranged on at least one surface of the negative electrode current collector and comprises a first negative electrode active material, the second negative electrode film layer is arranged on the first negative electrode film layer and comprises a second negative electrode active material, the first negative electrode active material comprises artificial graphite, the second negative electrode active material comprises natural graphite, and the compacted density of the negative electrode film layer is less than or equal to 1.6 g/cm³.

In any embodiment, the compacted density of the negative electrode film layer is 1.3 g/cm³ to 1.6 g/cm³, optionally 1.4 g/cm³ to 1.55 g/cm³.

In any embodiment, the powder compacted density of the second negative electrode active material under a pressure of 30,000 N is greater than that of the first negative electrode active material under a pressure of 30,000 N.

In any embodiment, the volume-average particle size Dv50 of the second negative electrode active material is greater than that of the first negative electrode active material.

In any embodiment, the specific surface area of the second negative electrode active material is greater than that of the first negative electrode active material.

In any embodiment, the graphitization degree of the second negative electrode active material is greater than that of the first negative electrode active material.

In any embodiment, the porosity of the second negative electrode film layer is greater than that of the first negative electrode film layer.

In any embodiment, the morphology of the natural graphite is one or more of a spherical shape and a spheroidal shape.

In any embodiment, the morphology of the artificial graphite is one or more of a block shape and a sheet shape.

In any embodiment, the mass proportion of the natural graphite in the second negative electrode active material is greater than or equal to 60%, optionally 80-100%.

In any embodiment, the mass proportion of the artificial graphite in the first negative electrode active material is greater than or equal to 60%, optionally 80-100%.

In any embodiment, the thickness ratio of the first negative electrode film layer to the second negative electrode film layer is 1 : 0.9 to 1 : 1.5, optionally 1 : 0.1 to 1 : 1.2.

In any embodiment, the surface density CW of the negative electrode film layer satisfies: 9 mg/cm² ≤ CW ≤ 13 mg/cm², optionally 10.0 mg/cm² ≤ CW ≤ 11.5 mg/cm².

In any embodiment, the first negative electrode film layer and/or the second negative electrode film layer comprise a silicon-based material.

In any embodiment, the first negative electrode film layer comprises the silicon-based material, and the mass proportion of the silicon-based material in the first negative electrode film layer is less than or equal to 60%, optionally 1-30%.

In any embodiment, the second negative electrode film layer comprises the silicon-based material, and the mass proportion of the silicon-based material in the second negative electrode film layer is less than or equal to 10%, optionally 1-5%.

In any embodiment, the first negative electrode film layer and the second negative electrode film layer both comprise the silicon-based material, the mass proportion of the silicon-based material in the first negative electrode film layer is denoted as W1, and the mass proportion of the silicon-based material in the second negative electrode film layer is denoted as W2, with W1 ≥ W2.

In any embodiment, both surfaces of the negative electrode current collector are provided with the negative electrode film layers, and the negative electrode film layers on the two surfaces have different thicknesses.

In any embodiment, both surfaces of the negative electrode current collector are provided with the negative electrode film layers, and the negative electrode film layers on the two surfaces have different surface densities.

In any embodiment, both surfaces of the negative electrode current collector are provided with the negative electrode film layers, and the negative electrode film layers on the two surfaces have different compacted densities.

In any embodiment, the secondary battery comprises a positive electrode plate, the positive electrode plate comprises a positive electrode current collector and a positive electrode film layer arranged on at least one surface of the positive electrode current collector and comprising a positive electrode active material, and the positive electrode active material comprises one or more of a lithium transition metal oxide, a lithium-containing phosphate with an olivine structure, and respective modified compounds thereof.

In any embodiment, optionally, the positive electrode active material comprises one or more of a lithium-containing phosphate with an olivine structure and a respective modified compound thereof.

A second aspect of the present application provides a method for manufacturing a secondary battery, comprising manufacturing a negative electrode plate of the secondary battery by the following steps:
1) forming a first negative electrode film layer comprising a first negative electrode active material on at least one surface of a negative electrode current collector, wherein the first negative electrode active material comprises artificial graphite;
2) forming a second negative electrode film layer comprising a second negative electrode active material on the first negative electrode film layer, wherein the second negative electrode active material comprises natural graphite; and
3) controlling the compacted density of the negative electrode film layer to be 1.6 g/cm³ or less by a cold pressing process.

A third aspect of the present application provides a device comprising the secondary battery of the first aspect of the present application or a secondary battery manufactured by the method according to the second aspect of the present application.

Compared with the prior art, the present application comprises at least the following beneficial effects: since the negative electrode plate of the secondary battery of the present application comprises a first negative electrode film layer and a second negative electrode film layer, wherein a first negative electrode active material with a specific composition is selected for the first negative electrode film layer, and a second negative electrode active material with a specific composition is selected for the second negative electrode film layer; and the compacted densities of the negative electrode film layers are controlled within specific ranges, the secondary battery of the present application has a better low-temperature power performance in addition to having a relatively high energy density.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may also derive other drawings from these drawings without creative efforts.
Fig. 1 is a schematic diagram of an embodiment of the secondary battery of the present application.
Fig. 2 is a schematic diagram of an embodiment of a negative electrode plate in the secondary battery of the present application.
Fig. 3 is a schematic diagram of another embodiment of a negative electrode plate in the secondary battery of the present application.
Fig. 4 is an exploded schematic diagram of an embodiment of the secondary battery of the present application.
Fig. 5 is a schematic diagram of an embodiment of a battery module.
Fig. 6 is a schematic diagram of an embodiment of a battery pack.
Fig. 7 is an exploded schematic diagram of Fig. 6.
Fig. 8 is a schematic diagram of an embodiment of a device containing the secondary battery of the present application as a power supply.
Fig. 9 is a scanning electron microscope (SEM) image of a cross section of the negative electrode plate manufactured in Example 1.

Reference Numerals: 1 battery pack, 2 upper box body, 3 lower box body, 4 battery module, 5 secondary battery, 51 shell body, 52 electrode assembly, 53 cover plate, 10 negative electrode plate, 101 negative electrode current collector, 102 second negative electrode film layer, and 103 first negative electrode film layer.

### Detailed Description of Embodiments

Hereinafter, embodiments of the secondary battery of the present application, the manufacturing method therefor, and the device containing the secondary battery are specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise stated, all the embodiments and optional embodiments of the present application may be combined with one another to form new technical solutions, and such technical solutions should be considered to be included in the disclosure of the present application.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

In the present application, the terms "multiple" and "a plurality of" mean two or more.

Unless otherwise stated, the terms used in the present application have the meaning well-known to those skilled in the art. Unless otherwise stated, the values of the parameters mentioned in the present application may be measured by various measurement methods commonly used in the art (for example, may be measured according to the method illustrated in the examples of the present application).

### Secondary battery

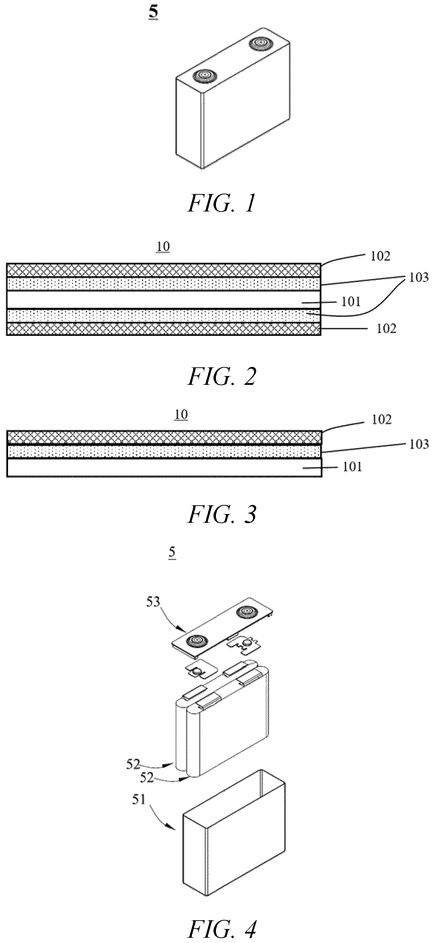

A first aspect of the present application provides a secondary battery. The secondary battery comprises a positive electrode plate, a negative electrode plate, and an electrolyte. During the charge/discharge of the battery, active ions are intercalated and de-intercalated back and forth between the positive electrode plate and the negative electrode plate. The electrolyte functions to conduct active ions between the positive electrode plate and the negative electrode plate. The shape of the secondary battery is not particularly limited in the present application and may be cylindrical, square or of any other shape. For example, Fig. 1 shows a secondary battery 5 with a square structure as an example.

### [Negative electrode plate]

The negative electrode plate of the secondary battery of the present application comprises a negative electrode current collector and a negative electrode film layer, wherein the negative electrode film layer comprises a first negative electrode film layer and a second negative electrode film layer, the first negative electrode film layer is arranged on at least one surface of the negative electrode current collector and comprises a first negative electrode active material, the second negative electrode film layer is arranged on the first negative electrode film layer and comprises a second negative electrode active material, the first negative electrode active material comprises artificial graphite, the second negative electrode active material comprises natural graphite, and the compacted density of the negative electrode film layer is less than or equal to 1.6 g/cm³.

Since the negative electrode plate in the present application has the negative electrode film layer with a double-layer structure, and the first negative electrode film layer and the second negative electrode film layer respectively have a specific first negative electrode active material and second negative electrode active material, the battery has a better low-temperature power performance in addition to having a relatively high energy density. The inventors have found through researches that when the first negative electrode active material of the present application comprises artificial graphite, the second negative electrode active material comprises natural graphite, and the compacted density of the negative electrode film layer is controlled within a given range, active sites in the first negative electrode film layer and the second negative electrode film layer are rationally matched, which facilitates the improvement of the low-temperature power performance of the battery. In addition, the porosities of the first negative electrode film layer and the second negative electrode film layer are also rationally optimized, which facilitates infiltration with an electrolyte solution and prolonging of the cycle life of the battery. Natural graphite has a better dynamic performance and is beneficial to transmission of active ions when located in the second negative electrode film layer away from the negative electrode current collector. However, natural graphite is not pressure-resistant. Therefore, when the compacted density of the negative electrode film layer is controlled within a given range, it is beneficial to give full play to the active ion transmission characteristic of natural graphite, and therefore, the battery has a better low-temperature power performance in addition to having a relatively high energy density. Artificial graphite has a better cycling performance and is beneficial to the improvement of the cycle life and energy density of the battery when located in the first negative electrode film layer close to the negative electrode current collector.

It should be noted that the compacted density of the negative electrode film layer refers to the compacted density of the entire negative electrode film layer, instead of the compacted density of each of the first negative electrode film layer and the second negative electrode film layer.

In some embodiments, the compacted density of the negative electrode film layer is 1.3 g/cm³ to 1.6 g/cm³, optionally 1.4 g/cm³ to 1.55 g/cm³.

The compacted density of the negative electrode film layer has a meaning well-known in the art and may be tested by a method known in the art. Compacted density of negative electrode film layer = surface density of negative electrode film layer/thickness of negative electrode film layer.

The surface density of the negative electrode film layer has a meaning well-known in the art and may be tested by a method known in the art. For example, a coated and cold-pressed negative electrode plate is taken and punched into a small disc with an area of S1, and the mass of the small disc is weighed and denoted as M1; a small disc with the same area of S1 is then taken, a negative electrode film layer is wiped off, and the mass of a negative electrode current collector is weighed and denoted as M0; and the surface density of the negative electrode film layer = (mass M1 of negative electrode plate - mass M0 of negative electrode current collector)/S1. In order to ensure the accuracy of the test result, a plurality of sets (e.g., 10 sets) of samples to be tested may be tested, and the average value thereof is taken as the test result.

The thickness of the negative electrode film layer may be measured by a sub-micron micrometer caliper, for example, by sub-micron micrometer caliper model Mitutoyo 293-100 with a precision of 0.1 µm. In the present application, the thickness of the negative electrode film layer refers to the sum of the thicknesses of the first negative electrode film layer and the second negative electrode film layer.

The inventors of the present application have found through intensive research that when the negative electrode plate of the present application satisfies the above design, if one or more of the following parameters are further optionally satisfied, the performance of the battery may be further improved.

In some embodiments, the powder compacted density of the second negative electrode active material under a pressure of 30,000 N is greater than that of the first negative electrode active material under a pressure of 30,000 N.

The powder compacted density of the material has a meaning well-known in the art and may be tested by a method known in the art. For example, it may be tested with reference to GB/T 24533-2009 using an electronic pressure testing machine (e.g., UTM7305): a certain amount of powder is placed on a mold specialized for compaction and various pressures are set; the thicknesses of the powder under these different pressures may be read on the apparatus; and after calculation, the compacted densities under these different pressures may be obtained. In the present application, the pressure is set to 30,000 N.

In some embodiments, the volume-average particle size Dv50 of the second negative electrode active material is greater than that of the first negative electrode active material.

The volume-average particle size Dv50 of the material has a meaning well-known in the art and may be tested by a method known in the art. For example, the volume-average particle size Dv50 may be measured by a laser diffraction particle size distribution measuring apparatus (e.g., Mastersizer 3000) according to a particle size distribution laser diffraction method (specifically, referring to GB/T19077-2016). Dv50 refers to the corresponding particle size when the cumulative volume percentage of the material reaches 50%.

In some embodiments, the specific surface area (SSA) of the second negative electrode active material is greater than that of the first negative electrode active material.

The specific surface area (SSA) of the material has a meaning well-known in the art, and may be tested by a method well-known in the art, for example, by a nitrogen adsorption specific surface area analysis test method and calculated by Brunauer Emmett Teller (BET) method. The nitrogen adsorption specific surface area analysis test may be performed by Model NOVA 2000e specific surface area and pore size analyzer from Quantachrome, USA.

In some embodiments, the graphitization degree of the second negative electrode active material is greater than that of the first negative electrode active material.

The graphitization degree of the material has a well-known meaning in the art and may be tested by a method well-known in the art. For example, the test may be performed by an X-ray diffractometer (such as Bruker D8 Discover). Referring to JIS K 0131-1996 and JB/T 4220-2011, d₀₀₂ is measured, and then, the graphitization degree may be calculated according to the formula G = (0.344 - d₀₀₂)/(0.344 - 0.3354) × 100%, wherein d₀₀₂ is the interlayer spacing in the crystal structure of the material expressed in nanometers (nm).

In some embodiments, the porosity of the second negative electrode film layer is greater than that of the first negative electrode film layer.

The porosity of the film layer has a meaning well-known in the art and may be tested by a method known in the art. For example, the true volume of the film layer is obtained by an AccuPyc II 1340 model full-automatic true density tester (Micromeritics, USA) and a gas (such as helium or nitrogen) replacement method with reference to GB/T 24586-2009. Porosity of film layer = (apparent volume of film layer-true volume of film layer)/apparent volume of film layer.

In some embodiments, the morphology of the natural graphite is one or more of a spherical shape and a spheroidal shape.

In some embodiments, the morphology of the artificial graphite is one or more of a block shape and a sheet shape.

The morphology of the material has a meaning well-known in the art and may be tested by a method known in the art. For example, the material is glued to a conductive adhesive and the morphology of the material is mapped by a scanning electron microscope (e.g., ZEISS Sigma 300). Reference can be made to JY/T010-1996 for the test.

In some embodiments, the natural graphite has a pore structure inside, such that the natural graphite and the artificial graphite in the negative electrode film layer may be distinguished by an optical microscope, a scanning electron microscope, etc., and a position of a boundary region between the first negative electrode film layer and the second negative electrode film layer may be easily determined.

In some embodiments, the mass proportion of the natural graphite in the second negative electrode active material is greater than or equal to 60%, optionally 80-100%.

In some embodiments, the mass proportion of the artificial graphite in the first negative electrode active material is greater than or equal to 60%, optionally 80-100%.

In some embodiments, the thickness ratio of the first negative electrode film layer to the second negative electrode film layer is 1 : 0.9 to 1 : 1.5, optionally 1 : 1.01 to 1 : 1.2.

When the thickness ratio of the first negative electrode film layer to the second negative electrode film layer is in the given range, it is conducive to form a gradient pore distribution in the negative electrode film layer, such that the liquid phase conduction resistance of active ions de-intercalated from a positive electrode on the surface of the negative electrode film layer is reduced and the problem of lithium precipitation caused by accumulation of active ions on the surface of the negative electrode film layer will not be caused. In addition, the uniform diffusion of the active ions in the negative electrode film layer is also conducive to reducing polarization, thereby further improving the low-temperature power performance and cycling performance of the battery.

In the present application, the respective thicknesses of the first negative electrode film layer and the second negative electrode film layer may be tested by a scanning electron microscope (e.g., ZEISS Sigma 300). A sample is prepared as follows: firstly, cutting a negative electrode plate into a sample to be detected with a certain size (such as 2 cm × 2 cm) and fixing the negative electrode plate on a sample stage by means of paraffin; and then mounting the sample stage onto a sample holder, locking and fixing the sample stage, turning on a power supply of an argon ion section polisher (e.g., IB-19500CP), performing evacuation (e.g., 10⁻⁴ Pa), setting an argon flow (e.g., 0.15 MPa), a voltage (e.g., 8 KV), and polishing time (e.g., 2 hours), and adjusting the sample stage to a rocking mode to start polishing. For the sample test, reference can be made to JY/T010-1996. In order to ensure the accuracy of the test result, a plurality of (e.g., 10) different regions may be randomly selected from the sample to be tested for a scanning test. The respective thicknesses of the first negative electrode film layer and the second negative electrode film layer in a scale test region are read at a certain magnification (e.g., 500x), and the average values of the test results of the plurality of test regions are taken as the respective thicknesses of the first negative electrode film layer and the second negative electrode film layer.

In some embodiments, the surface density CW of the negative electrode film layer satisfies: 9 mg/cm² ≤ CW ≤ 13 mg/cm², optionally 10.0 mg/cm² ≤ CW ≤ 11.5 mg/cm².

It should be noted that the surface density CW of the negative electrode film layer refers to the surface density of the entire negative electrode film layer, that is, the sum of the surface densities of the first negative electrode film layer and the second negative electrode film layer.

In the secondary battery of the present application, the first negative electrode film layer and/or the second negative electrode film layer generally contain a negative electrode active material, an optional binder, an optional conductive agent, and additional optional auxiliary agents, and they are generally formed by coating and drying respective film layer slurries. The negative electrode film layer slurry is generally formed by dispersing a negative electrode active material, an optional conductive agent, an optional binder, etc. in a solvent, and uniformly stirring same. For example, the solvent may be N-methylpyrrolidone (NMP) or deionized water. For example, the additional auxiliary agents may be a thickener (such as sodium carboxymethyl cellulose (CMC-Na)), a PTC thermistor material, etc.

By way of example, the conductive agent may comprise one or more of superconductive carbon, acetylene black, carbon black, Ketjen black, carbon dots, carbon nanotubes, graphene, and carbon nanofibers.

By way of example, the binder may comprise one or more of a styrene-butadiene rubber (SBR), a water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB).

In the secondary battery of the present application, the first negative electrode active material and/or the second negative electrode active material may further optionally comprise a certain amount of other common negative electrode active materials, such as one or more of soft carbon, hard carbon, a silicon-based material, a tin-based material, and lithium titanate, in addition to the above-mentioned graphite material in the present application. The silicon-based material may comprise one or more of elemental silicon, a silicon oxide compound, a silicon carbon composite, and a silicon alloy. The tin-based material may comprise one or more of elemental tin, a tin oxide compound, and a tin alloy. The silicon-based material may be a prelithiated silicon-based material or a non-prelithiated silicon-based material. The tin-based material may be a prelithiated tin-based material or a non-prelithiated tin-based material. The preparation methods for these materials are well known and commercially available. The methods may be suitably selected by those skilled in the art according to the actual service environment.

In some embodiments, the first negative electrode film layer and/or the second negative electrode film layer comprise a silicon-based material. Optionally, the silicon-based material is a prelithiated silicon-based material, and therefore, the volume expansion of the negative electrode plate may be reduced and active ion loss may be compensated for.

In some embodiments, the first negative electrode film layer comprises the silicon-based material, and the mass proportion of the silicon-based material in the first negative electrode film layer is less than or equal to 60%, optionally 1-30%.

In some embodiments, the second negative electrode film layer comprises the silicon-based material, and the mass proportion of the silicon-based material in the second negative electrode film layer is less than or equal to 10%, optionally 1-5%.

In some embodiments, the first negative electrode film layer and the second negative electrode film layer both comprise the silicon-based material, the mass proportion of the silicon-based material in the first negative electrode film layer is denoted as W1, and the mass proportion of the silicon-based material in the second negative electrode film layer is denoted as W2, with W 1 ≥ W2.

The tests above for the various parameters of the first negative electrode active material and the second negative electrode active material may be carried out either by sampling before coating with a slurry or by sampling from the negative electrode film layer after cold pressing.

When the above-mentioned test sample is taken from the negative electrode film layer after cold pressing, the sampling may be performed according to the following steps, by way of example:
(1) firstly, randomly selecting a cold-pressed negative electrode film layer, sampling a second negative electrode active material (for example, sampling by scraping a powder using a blade), wherein the scraping depth does not exceed the boundary region between the first negative electrode film layer and the second negative electrode film layer;
(2) secondly, sampling a first negative electrode active material sample, wherein since during the cold pressing of the negative electrode film layer, there may be an interfusion layer in the boundary region between first negative electrode film layer and the second negative electrode film layer (that is, the interfusion layer has both a first active material and a second active material), and for the accuracy of the test, at the time of sampling the first negative electrode active material, the interfusion layer may be scraped off in advance before the first negative electrode active material is sampled by powder scraping; and
(3) respectively placing the above-mentioned collected first negative electrode active material and second negative electrode active material in deionized water, performing suction filtration on the first negative electrode active material and the second negative electrode active material, drying the materials, sintering the dried respective negative electrode active materials at a certain temperature for a certain time (e.g., at 400°C for 2 h), and removing a binder and a conductive agent to obtain test samples of the first negative electrode active material and the second negative electrode active material.

During the above-mentioned sampling process, the position of the boundary region between the first negative electrode film layer and the second negative electrode film layer may be determined by means of an optical microscope or a scanning electron microscope.

The natural graphite and artificial graphite used in the present application are both commercially available.

In the secondary battery of the present application, the negative electrode current collector may be a metal foil or a composite current collector, and the composite current collector may be formed by arranging a metal material on a polymer substrate. By way of example, the negative electrode current collector may be a copper foil.

In the secondary battery of the present application, the negative electrode film layer may be arranged either on one surface of the negative electrode current collector or on both surfaces of the negative electrode current collector.

Fig. 2 shows a schematic diagram of an embodiment of a negative electrode plate 10 of the secondary battery of the present application. The negative electrode plate 10 is composed of a negative electrode current collector 101, first negative electrode film layers 103 respectively arranged on both surfaces of the negative electrode current collector 101, and second negative electrode film layers 102 arranged on the first negative electrode film layers 103.

Fig. 3 shows a schematic diagram of another embodiment of a negative electrode plate 10 of the secondary battery of the present application. The negative electrode plate 10 is composed of a negative electrode current collector 101, a first negative film layer 103 arranged on one surface of the negative electrode current collector 101, and a second negative film layer 102 arranged on the first negative electrode film layer 103.

In the secondary battery of the present application, when the negative electrode film layers are arranged on both surfaces of the negative electrode current collector, the ranges of the parameters (e.g., thickness, surface density, and compacted density) of the negative electrode film layers located on both sides of the negative electrode current collector may be the same or different.

In some examples, both surfaces of the negative electrode current collector are provided with the negative electrode film layers, and the negative electrode film layers on the two surfaces have different thicknesses.

In some examples, both surfaces of the negative electrode current collector are provided with the negative electrode film layers, and the negative electrode film layers on the two surfaces have different surface densities.

In some examples, both surfaces of the negative electrode current collector are provided with the negative electrode film layers, and the negative electrode film layers on the two surfaces have different compacted densities.

When one or more of the parameters thickness, surface density, and compacted density of the negative electrode film layers on the two surfaces of the negative electrode current collector are different, at least one of the effects of reducing the internal resistance of the battery, improving the safety performance of the battery, and prolonging the cycle life of the battery may be achieved through a differentiated design of the negative electrode film layer.

It should be noted that the ranges of the parameters (e.g., thickness, surface density, and compacted density) of each negative electrode film layer given by the present application refer to the ranges of the parameters of the negative electrode film layer on a single side of the negative electrode current collector. When the negative electrode film layers are arranged on both surfaces of the negative electrode current collector, the parameters of the negative electrode film layer on either surface thereof that conform to the present application are deemed to fall within the scope of protection of the present application. In addition, the ranges of the parameters, such as thickness, surface density, and compacted density, of the negative electrode film layer of the present application all refer to the ranges of the parameters of the negative electrode film layer which has been compacted by cold pressing and used for assembling the battery.

In addition, in the secondary battery of the present application, the negative electrode plate may include other additional functional layers in addition to the negative electrode film layer. For example, in some embodiments, the negative electrode plate of the present application may further comprise a conductive priming coat (e.g., composed of a conductive agent and a binder) arranged between the negative electrode current collector and the first negative electrode film layer and on the surface of the negative electrode current collector. In some other embodiments, the negative electrode plate of the present application may further comprise a protective layer covering the surface of the second negative electrode film layer.

### [Positive electrode plate]

In the secondary battery of the present application, the positive electrode plate comprises a positive electrode current collector and a positive electrode film layer arranged on at least one surface of the positive current collector and comprising a positive electrode active material.

It can be understood that the positive electrode current collector has two opposite surfaces in the thickness direction of its own, and the positive electrode film layer may be arranged on either or both of the two opposite surfaces of the positive electrode current collector.

In the secondary battery of the present application, the positive electrode current collector may be a conventional metal foil or a composite current collector, and the composite current collector may be formed by arranging a metal material on a polymer substrate. By way of example, the positive electrode current collector may be an aluminum foil.

In the secondary battery of the present application, the positive electrode active material may comprise one or more of a lithium transition metal oxide, a lithium-containing phosphate with an olivine structure, and respective modified compounds thereof. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include, but are not limited to, one or more of a lithium iron phosphate, a lithium iron phosphate and carbon composite, a lithium manganese phosphate, a lithium manganese phosphate and carbon composite, a lithium iron manganese phosphate, a lithium iron manganese phosphate and carbon composite, and respective modified compounds thereof. The present application is not limited to these materials, and other conventional well-known materials that may be used as positive electrode active materials for secondary batteries may also be used.

In some embodiments, in order to further improve the energy density of the battery, the positive electrode active material may comprise one or more of lithium transition metal oxides represented by formula 1 and modified compounds thereof.

LiₐNi_{b}Co_{c}M_{d}OₑA_{f} Formula 1

In formula 1, 0.8 ≤ a ≤ 1.2, 0.5 ≤ b < 1, 0 < c < 1, 0 < d < 1, 1 ≤ e ≤ 2, 0 ≤ f ≤ 1, M is selected from one or more of Mn, Al, Zr, Zn, Cu, Cr, Mg, Fe, V, Ti, and B, and A is selected from one or more of N, F, S, and Cl.

In some embodiments, in order to improve the safety performance of the battery, the positive electrode active material may comprise one or more of a lithium-containing phosphate with an olivine structure and a modified compound thereof, for example, the positive electrode active material may comprise one or more of lithium iron phosphate, a composite of lithium iron phosphate and carbon, and respective modified compounds thereof.

In the present application, the modified compounds of these materials above may be obtained by the doping modification and/or surface coating modification of the material.

In the secondary battery of the present application, the positive electrode film layer may further optionally comprise a binder and/or a conductive agent.

By way of example, the binder of the positive electrode film layer may comprise one or more of polyvinylidene fluoride (PVDF) and polytetrafluoroethylene (PTFE).

By way of example, the conductive agent of the positive electrode film layer may comprise one or more of superconductive carbon, acetylene black, carbon black, Ketjen black, carbon dots, carbon nanotubes, graphene, and carbon nanofibers.

### [Electrolyte]

The electrolyte functions to conduct active ions between the positive electrode plate and the negative electrode plate. The type of the electrolyte is not specifically limited in the present application and may be selected according to requirements. For example, the electrolyte may be selected from at least one of a solid electrolyte and a liquid electrolyte (i.e., electrolyte solution).

In some embodiments, an electrolyte solution is used as the electrolyte. The electrolyte solution comprises an electrolyte salt and a solvent.

In some embodiments, the electrolyte salt may comprise one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethanesulfonimide) (LiTFSI), lithium trifluoromethanesulfonate (LiTFS), lithium difluorooxalatoborate (LiDFOB), lithium bis(oxalato)borate (LiBOB), lithium difluorophosphate (LiPO₂F₂), lithium bisoxalatodifluorophosphate (LiDFOP), and lithium tetrafluorooxalatophosphate (LiTFOP).

In some embodiments, the solvent may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution may optionally comprise an additive. For example, the additive may comprise a negative electrode film-forming additive, or may also comprise a positive electrode film-forming additive, or may also comprise an additive that may improve certain properties of a battery, such as an additive that improves the overcharge performance of a battery, an additive that improves the high-temperature performance of a battery, and an additive that improves the low-temperature performance of a battery.

### [Separator]

Secondary batteries using an electrolyte solution and some secondary batteries using a solid electrolyte further comprise a separator. The separator is arranged between the positive electrode plate and the negative electrode plate, and plays the role of separation. The type of the separator is not particularly limited in the present application, and any well-known porous-structure separator with a good chemical stability and mechanical stability may be selected. In some embodiments, the material of the separator may comprise one or more of glass fibers, non-woven fabrics, polyethylene, polypropylene, and polyvinylidene fluoride. The separator may be either a single-layer film or a multi-layer composite film. When the separator is a multi-layer composite film, the materials of respective layers may be the same or different.

In some embodiments, an electrode assembly may be formed from the positive electrode plate, the negative electrode plate, and the separator by a winding process and/or a laminating process.

In some embodiments, the secondary battery may comprise an outer package. The outer package may be used to encapsulate the above-mentioned electrode assembly and electrolyte.

In some embodiments, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be plastics, such as one or more of polypropylene (PP), polybutylene terephthalate (PBT), and polybutylene succinate (PBS).

In some embodiments, as shown in Fig. 4, the outer package may comprise a shell body 51 and a cover plate 53. The shell body 51 may comprise a bottom plate and side plates connected to the bottom plate, and the bottom plate and the side plates are enclosed to form an accommodating cavity. The shell body 51 has an opening in communication with the accommodating cavity, and the cover plate 53 may cover the opening to close the accommodating cavity. An electrode assembly 52 may be formed from the positive electrode plate, the negative electrode plate, and the separator by a winding process and/or a laminating process. The electrode assembly 52 is packaged in the accommodating cavity. The electrolyte solution infiltrates the electrode assembly 52. The number of the electrode assemblies 52 contained in the secondary battery 5 may be one or more and may be adjusted according to requirements.

In some embodiments, the secondary battery may be assembled into a battery module, and the number of the secondary batteries contained in the battery module may be multiple, and the specific number may be adjusted according to the application and capacity of the battery module.

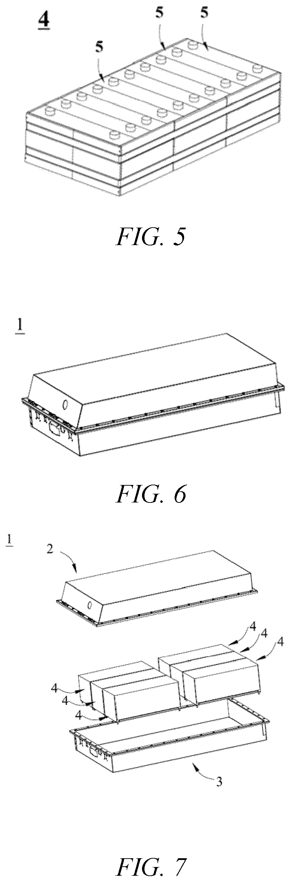

Fig. 5 shows a battery module 4 as an example. As shown in Fig. 5, in the battery module 4, a plurality of secondary batteries 5 may be arranged in sequence along the lengthwise direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above-mentioned battery module may also be assembled into a battery pack, and the number of the battery modules contained in the battery pack may be adjusted according to the application and capacity of the battery pack.

Figs. 6 and 7 show a battery pack 1 as an example. As shown in Fig. 6 and Fig. 7, the battery pack 1 may comprise a battery box and a plurality of battery modules 4 arranged in the battery box. The battery box comprises an upper box body 2 and a lower box body 3, and the upper box body 2 may cover the lower box body 3 to form a closed space for accommodating the battery modules 4. The plurality of battery modules 4 may be arranged in the battery box in any manner.

### Manufacturing method for secondary battery

In a second aspect, the present application provides a method for manufacturing a secondary battery, comprising manufacturing a negative electrode plate of the secondary battery by the following steps:
1) forming a first negative electrode film layer comprising a first negative electrode active material on at least one surface of a negative electrode current collector, wherein the first negative electrode active material comprises artificial graphite;
2) forming a second negative electrode film layer comprising a second negative electrode active material on the first negative electrode film layer, wherein the second negative electrode active material comprises natural graphite; and
3) controlling the compacted density of the negative electrode film layer to be 1.6 g/cm³ or less by a cold pressing process.

During the manufacturing of the secondary battery, by controlling and adjusting the respective compositions of the first negative electrode active material and the second negative electrode active material of the negative electrode plate and the manufacturing process of the negative electrode plate, the secondary battery of the present application also has a better low-temperature power performance in addition to having a relatively high energy density.

In the manufacturing method for the secondary battery, a first negative electrode slurry for forming the first negative electrode film layer and a second negative electrode slurry for forming the second negative electrode film layer may be applied simultaneously in one step, or also may be applied in two steps.

In some embodiments, the first negative electrode slurry and the second negative electrode slurry are applied simultaneously in one step. The simultaneous application in one step can result in better bonding between the first negative electrode film layer and the second negative electrode film layer, which helps further improve the low-temperature power performance and cycling performance of the battery.

Except the manufacturing method for the negative electrode plate of the present application, other structures and manufacturing methods of the secondary battery of the present application are well-known. For example, the positive electrode plate of the present application may be manufactured by a method involving: mixing a positive electrode active material, an optional conductive agent (such as carbon black), a binder (such as PVDF), etc., dispersing the mixture in a solvent (such as NMP), uniformly stirring the mixture, applying the mixture on a positive electrode current collector, and drying the mixture to obtain a positive electrode plate. A metal foil such as an aluminum foil may be used as the positive electrode current collector. During the manufacturing of the positive electrode plate, a positive electrode tab may be obtained in an uncoated region of the positive electrode current collector by means of a method such as punching or laser die cutting.

Finally, the secondary battery may be manufactured by a method involving: stacking a positive electrode plate, a separator, and a negative electrode plate in sequence, such that the separator is located between the positive electrode plate and the negative electrode plate and functions to separate same, and then performing a winding (and/or laminating) process to obtain an electrode assembly; and placing the electrode assembly in an outer packaging, injecting an electrolyte solution after drying, and performing the procedures of vacuum packaging, standing, forming, shaping, etc. to obtain the secondary battery.

The secondary battery of the first aspect of the present application can be manufactured by the method for manufacturing a secondary battery as provided in the second aspect of the present application. For some raw materials used in the manufacturing process for the secondary battery and the parameters thereof such as the content thereof, reference can be made to the secondary battery of the first aspect of the present application, and no more details are given repeatedly here. If not specifically mentioned, each raw material used in the manufacturing process for the secondary battery of the present application is commercially available.

### Device

A third aspect of the present application provides a device. The device comprises the secondary battery of the first aspect of the present application or a secondary battery obtained by the method of the second aspect of the present application. The secondary battery may be used either as a power supply for the device or as an energy storage unit for the device. The device of the present application has the secondary battery provided by the present application and thus has at least the same advantages as the secondary battery.

The device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the device, a secondary battery, a battery module or a battery pack can be selected according to service requirements.

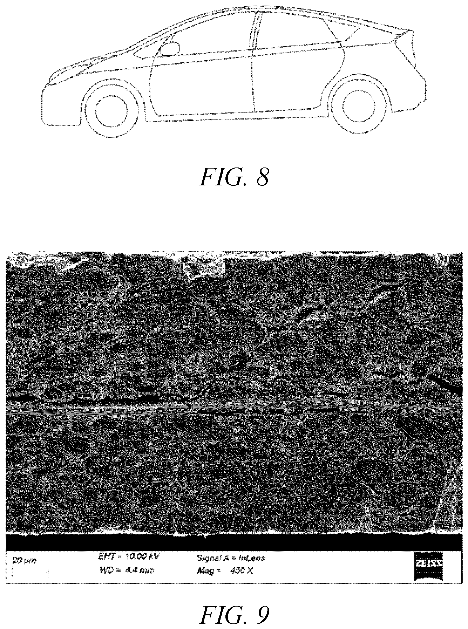

Fig. 8 shows a device as an example. The device is a pure electric vehicle, a hybrid electric vehicle, a plug-in hybrid electric vehicle, etc. In order to meet the requirements of the device for a high power and a high energy density of a secondary battery, a battery pack or a battery module may be used.

As another example, the device may be a mobile phone, a tablet computer, a laptop computer, etc. The device is generally required to be thin and light and may has a secondary battery as a power supply.

The beneficial effects of the present application will be further described below in conjunction with examples.

### Examples

In order to make the objectives, technical solutions, and beneficial technical effects of the present application clearer, the following further describes the present application in detail with reference to examples. However, it should be understood that the examples of the present application are only for explaining the present application, rather than limiting the present application. Besides, the examples of the present application are not limited to the examples given in the description. For examples in which no specific experimental or operational conditions are specified, the secondary battery may be manufactured according to conventional conditions or conditions recommended by the suppliers of materials.

### I. Manufacturing of secondary battery

### Example 1

### 1) Manufacturing of positive electrode plate

Lithium iron phosphate as a positive electrode active material, conductive carbon black Super-P as a conductive agent, and polyvinylidene fluoride (PVDF) as a binder were fully stirred and uniformly mixed in N-methylpyrrolidone as a solvent at a mass ratio of 97 : 1 : 2 to prepare a positive electrode slurry, the positive electrode slurry was applied on both surfaces of an aluminum foil as a positive electrode current collector, and the working procedures of drying, cold pressing, slitting, cutting, etc. were performed to obtain a positive electrode plate. The positive electrode film layer on one side of the positive electrode current collector had a surface density of 22.7 mg/cm² and a compacted density of 2.6 g/cm³.

### 2) Manufacturing of negative electrode plate

Step I. Preparation of first negative electrode slurry: artificial graphite as a first negative electrode active material, SBR as a binder, carboxymethylcellulose sodium (CMC-Na) as a thickener, and conductive carbon black (Super P) as a conductive agent were fully stirred and uniformly mixed in deionized water as a solvent at a mass ratio of 96.2 : 1.8 : 1.2 : 0.8 to prepare a first negative electrode slurry. The artificial graphite had a powder compacted density of 1.7 g/cm³ under a pressure of 30,000 N, a volume-average particle size Dv50 of 12.5 µm, a specific surface area of 1.2 m²/g, a graphitization degree of 93.5%, and a morphology of one or more of a block shape and a sheet shape.

Step II. Preparation of second negative electrode slurry: natural graphite as a second negative electrode active material, SBR as a binder, carboxymethylcellulose sodium (CMC-Na) as a thickener, and conductive carbon black (Super P) as a conductive agent were fully stirred and uniformly mixed in deionized water as a solvent at a mass ratio of 96.2 : 1.8 : 1.2 : 0.8 to prepare a second negative electrode slurry. The natural graphite had a powder compacted density of 1.8 g/cm³ under a pressure of 30,000 N, a volume-average particle size Dv50 of 16.5 µm, a specific surface area of 3.0 m²/g, a graphitization degree of 97.5%, and a morphology of one or more of a spherical shape and a spheroidal shape.

Step III. the first negative electrode slurry and the second negative electrode slurry were simultaneously extruded to form a wet film by a double-chamber coating device. The first negative electrode slurry was applied on both surfaces of the copper foil as a negative electrode current collector to form a first negative electrode film layer, and the second negative electrode slurry was applied on the first negative electrode film layer to form a second negative electrode film layer.

Step IV. the above-mentioned wet film was baked and dried in various temperature regions of an oven, and then cold-pressed to obtain a negative electrode film layer with the desired compacted density, which was then subjected to the procedures of slitting, cutting, etc. to obtain a negative electrode plate. The thickness ratio of the first negative electrode film layer to the second negative electrode film layer is 1 : 1.01, the negative electrode film layer had a surface density of 10.5 mg/cm², and the negative electrode film layer had a compacted density of 1.6 g/cm³.

### 3) Separator

A PE film was used as a separator.

### 4) Preparation of electrolyte solution

Ethylene carbonate (EC), ethyl methyl carbonate (EMC), and diethyl carbonate (DEC) were mixed at a volume ratio of 1 : 1 : 1 to obtain an organic solvent, and a sufficiently dried lithium salt LiPF₆ was then dissolved in the above-mentioned organic solvent at a ratio of 1 mol/L to prepare an electrolyte solution.

### 5) Manufacturing of secondary battery

The above-mentioned positive electrode plate, separator, and negative electrode plate were stacked in sequence and wound to obtain an electrode assembly, the electrode assembly was placed in an outer packaging, the above-mentioned electrolyte solution was added, and the procedures of encapsulating, standing, forming, shaping, etc. were performed to obtain a secondary battery.

Examples 2-8 and Comparative Examples 1 and 2

Secondary batteries were manufactured by a method similar to Example 1, except that the composition of the negative electrode plate and the product parameters were adjusted, as detailed in Table 1.

### II. Performance test method

### 1) Energy density test

In an environment of 25°C, the secondary battery was discharged to a cut-off voltage of 2.0 V at a constant discharging current of 1.0 C (i.e., the theoretical capacity value at which the current was completely discharged within 1 h), then charged to a cut-off voltage of 3.8 V at a constant charging current of 1.0 C, and continuously charged at a constant voltage to a current of 0.05 C, and at this time the secondary battery was in a fully charged state. After being left to stand for 5 min, the fully charged secondary battery was discharged at a constant current of 1.0 C to a cut-off voltage of 2.0 V, and at this time the discharge capacity was the actual capacity of the secondary battery at 1.0 C and denoted as C0.

In an environment of 25°C, the secondary battery was charged to a cut-off voltage of 3.8 V at a constant charging current of 0.33 C0 and continuously charged at a constant voltage to a current of 0.05 C, and at this time the secondary battery was in a fully charged state. After being left to stand for 5 min, the fully charged secondary battery was discharged to a cut-off voltage of 2.0 V at a constant discharging current of 0.33 C0 to obtain the discharge energy Q of the secondary battery.

Energy density of secondary battery (Wh/Kg) = discharge energy Q of secondary battery/mass m of secondary battery.

### 2) Low-temperature power density test

The actual capacity C0 of the secondary battery at 1.0 C and the discharge energy Q of the secondary battery were obtained according to the above-mentioned energy density test method.

In an environment of 25°C, the secondary battery was charged to a cut-off voltage of 3.8 V at a constant charging current of 0.33 C0 and continuously charged at a constant voltage to a current of 0.05 C, and at this time the secondary battery was in a fully charged state. After being left to stand for 5 min, the fully charged secondary battery was discharged at a constant current of 0.33 C0 for 90 min (i.e., adjusted to 50% SOC), and then, the secondary battery was placed in an environment of -20°C and left to stand for 120 min, and the voltage U1 at this time was recorded. Then, the secondary battery was then discharged at a constant current of 0.36 C0 for 10 s, the voltage U2 at this time was recorded. The internal resistance R of secondary battery = (U1 - U2)/0.36/C0. According to a hybrid pulse power characteristic (HPPC) test method, the power P of secondary battery = [lower limit cut-off voltage × (U1 - lower limit cut-off voltage)/R] × 1000. Power density (W/Wh) of secondary battery at -20°C = power P of secondary battery/discharge energy Q of secondary battery. In the present application, the lower limit cut-off voltage was 2.0 V.

### III. Test results of these examples and comparative examples

The secondary batteries manufactured in these examples and comparative examples were respectively tested according to the above-mentioned performance test methods. The test results were detailed in Table 1.

**Table 1**

| No. | Type of first negative electrode active material | Type of second negative electrode active material | Compacted density of negative electrode film layer (g/cm³) | Power density at -20°C (W/Wh) | Energy density at 25 °C (Wh/kg) |
|---|---|---|---|---|---|
| Example 1 | Artificial graphite | Natural graphite | 1.60 | 1.45 | 185 |
| Example 2 | Artificial graphite | Natural graphite | 1.55 | 1.46 | 180 |
| Example 3 | Artificial graphite | Natural graphite | 1.50 | 1.47 | 175 |
| Example 4 | Artificial graphite | Natural graphite | 1.40 | 1.48 | 170 |
| Example 5 | Artificial graphite | Natural graphite | 1.30 | 1.50 | 155 |
| Example 6 | Artificial graphite | 95% natural graphite + 5% prelithiated silicon monoxide | 1.50 | 1.51 | 188 |
| Example 7 | 95% artificial graphite+5% prelithiated silicon monoxide | Natural graphite | 1.50 | 1.49 | 188 |
| Example 8 | 95% artificial graphite+5% prelithiated silicon monoxide | 95% natural graphite + 5% prelithiated silicon monoxide | 1.50 | 1.53 | 190 |
| Comparative Example 1 | Natural graphite | Artificial graphite | 1.50 | 1.25 | 175 |
| Comparative Example 2 | Artificial graphite | Natural graphite | 1.65 | 1.15 | 187 |

It could be known from the test data of Examples 1-8 and Comparative Examples 1 and 2 in Table 1: only when the first negative electrode active material was artificial graphite, the second negative electrode active material was natural graphite, and the compacted density of the negative electrode film layer was controlled to be 1.6 g/cm³ or less, the secondary battery could have a better low-temperature power performance in addition to having a relatively high energy density. Besides, when the compacted density of the negative electrode film layer was 1.3 g/cm³ to 1.6 g/cm³, especially 1.4 g/cm³ to 1.55 g/cm³, the secondary battery had a better comprehensive performance.

Fig. 9 is a scanning electron microscope (SEM) image of a cross section of the negative electrode plate manufactured in Example 1. It could be seen from Fig. 9 that the active sites, porosity, etc. of the first negative electrode film layer and the second negative electrode film layer were rationally optimized, which could result in the active ions being uniformly and rapidly diffused in the negative electrode film layer and also facilitate reduction of the polarization of the negative electrode. It could be seen from Fig. 9 that the natural graphite had a pore structure inside, whereby the natural graphite could be distinguished from the artificial graphite in the negative electrode film layer, and the position of the boundary region between the first negative electrode film layer and the second negative electrode film layer could be easily determined. The natural graphite was located in the second negative electrode film layer away from the negative electrode current collector, so the structural integrity thereof coulld be maintained better, and the transmission of active ions was thus facilitated. The artificial graphite, which was located in the first negative electrode film layer close to the negative electrode current collector, favorably improved the cycle life and the energy density of the battery.

In the negative electrode plate manufactured in Comparative Example 1, the natural graphite was located in the first negative electrode film layer close to the negative electrode current collector, and the artificial graphite was located in the second negative electrode film layer away from the negative electrode current collector. This was not conductive to the active ion transmission characteristic of the natural graphite, nor to the role of the artificial graphite in improving the cycle life and energy density of the secondary battery. Therefore, the energy density and low-temperature power performance of the secondary battery manufactured in Comparative Example 1 were both relatively poor.

In the negative electrode plate manufactured in Comparative Example 2, the compacted density of the negative electrode film layer was greater than 1.6 g/cm³, such that the first negative electrode film layer and the second negative electrode film layer became poorly matched in terms of active sites, porosity, etc. Besides, it was difficult for the secondary battery manufactured in Comparative Example 2 to have a better low-temperature power performance in addition to having a relatively high energy density.

It is also to be understood that the embodiments described above may be appropriately modified and varied by those skilled in the art in light of the disclosure and teachings from the description above. Therefore, the present application is not limited to the specific embodiments disclosed and described above, and modifications and variations of the present application should also fall within the scope of protection defined by the claims of the present application. In addition, although some specific terms have been used in the description, these terms are merely used for ease of description, but do not constitute any limitation to the present application.

## Claims

1. A secondary battery, comprising a negative electrode plate, wherein the negative electrode plate comprises a negative electrode current collector and a negative electrode film layer, the negative electrode film layer comprises a first negative electrode film layer and a second negative electrode film layer, the first negative electrode film layer is arranged on at least one surface of the negative electrode current collector and comprises a first negative electrode active material, the second negative electrode film layer is arranged on the first negative electrode film layer and comprises a second negative electrode active material,
the first negative electrode active material comprises artificial graphite, the second negative electrode active material comprises natural graphite, and the compacted density of the negative electrode film layer is less than or equal to 1.6 g/cm³.

2. The secondary battery according to claim 1, wherein the compacted density of the negative electrode film layer is 1.3 g/cm³ to 1.6 g/cm³, optionally 1.4 g/cm³ to 1.55 g/cm³.

3. The secondary battery according to either of claims 1-2, wherein the powder compacted density of the second negative electrode active material under a pressure of 30,000 N is greater than that of the first negative electrode active material under a pressure of 30,000 N.

4. The secondary battery according to any one of claims 1-3, wherein the volume-average particle size Dv50 of the second negative electrode active material is greater than that of the first negative electrode active material.

5. The secondary battery according to any one of claims 1-4, wherein the specific surface area of the second negative electrode active material is greater than that of the first negative electrode active material.

6. The secondary battery according to any one of claims 1-5, wherein the graphitization degree of the second negative electrode active material is greater than that of the first negative electrode active material.

7. The secondary battery according to any one of claims 1-6, wherein the porosity of the second negative electrode film layer is greater than that of the first negative electrode film layer.

8. The secondary battery according to any one of claims 1-7, wherein
the morphology of the natural graphite is one or more of a spherical shape and a spheroidal shape; and/or
the morphology of the artificial graphite is one or more of a block shape and a sheet shape.

9. The secondary battery according to any one of claims 1-8, wherein the mass proportion of the natural graphite in the second negative electrode active material is greater than or equal to 60%, optionally 80-100%.

10. The secondary battery according to any one of claims 1-9, wherein the mass proportion of the artificial graphite in the first negative electrode active material is greater than or equal to 60%, optionally 80-100%.

11. The secondary battery according to any one of claims 1-10, wherein the thickness ratio of the first negative electrode film layer to the second negative electrode film layer is 1 : 0.9 to 1 : 1.5, optionally 1 : 0.1 to 1 : 1.2.

12. The secondary battery according to any one of claims 1-11, wherein the surface density CW of the negative electrode film layer satisfies: 9 mg/cm² ≤ CW ≤ 13 mg/cm², optionally 10.0 mg/cm² ≤ CW ≤ 11.5 mg/cm².

13. The secondary battery according to any one of claims 1-12, wherein the first negative electrode film layer and/or the second negative electrode film layer comprise a silicon-based material.

14. The secondary battery according to any one of claims 1-13, wherein the first negative electrode film layer comprises the silicon-based material, and the mass proportion of the silicon-based material in the first negative electrode film layer is less than or equal to 60%, optionally 1-30%.

15. The secondary battery according to any one of claims 1-14, wherein the second negative electrode film layer comprises the silicon-based material, and the mass proportion of the silicon-based material in the second negative electrode film layer is less than or equal to 10%, optionally 1-5%.

16. The secondary battery according to any one of claims 1-15, wherein the first negative electrode film layer and the second negative electrode film layer both comprise the silicon-based material, the mass proportion of the silicon-based material in the first negative electrode film layer is denoted as W1, and the mass proportion of the silicon-based material in the second negative electrode film layer is denoted as W2, with W1 ≥ W2.

17. The secondary battery according to any one of claims 1-16, wherein
both surfaces of the negative electrode current collector are provided with the negative electrode film layers, and the negative electrode film layers on the two surfaces have different thicknesses; and/or
both surfaces of the negative electrode current collector are provided with the negative electrode film layers, and the negative electrode film layers on the two surfaces have different surface densities; and/or
both surfaces of the negative electrode current collector are provided with the negative electrode film layers, and the negative electrode film layers on the two surfaces have different compacted densities.

18. The secondary battery according to any one of claims 1-17, wherein the secondary battery comprises a positive electrode plate, the positive electrode plate comprises a positive electrode current collector and a positive electrode film layer arranged on at least one surface of the positive electrode current collector and comprising a positive electrode active material, and the positive electrode active material comprises one or more of a lithium transition metal oxide, a lithium-containing phosphate with an olivine structure, and respective modified compounds thereof, and
optionally, the positive electrode active material comprises one or more of a lithium-containing phosphate with an olivine structure and a respective modified compound thereof.

19. A method for manufacturing a secondary battery, comprising manufacturing a negative electrode plate of the secondary battery by the following steps:
1) forming a first negative electrode film layer comprising a first negative electrode active material on at least one surface of a negative electrode current collector, wherein the first negative electrode active material comprises artificial graphite;
2) forming a second negative electrode film layer comprising a second negative electrode active material on the first negative electrode film layer, wherein the second negative electrode active material comprises natural graphite; and
3) controlling the compacted density of the negative electrode film layer to be 1.6 g/cm³ or less by a cold pressing process.

20. A device, comprising the secondary battery according to any one of claims 1-18 or a secondary battery manufactured by the method according to claim 19.
